# EUROPÄISCHE PATENTANMELDUNG

(11) **EP 0 955 533 A2**
(43) Veröffentlichungstag der Anmeldung: **10.11.1999**
(21) Anmeldenummer: 99109104.2
(22) Anmeldetag: 07.05.1999
(51) Int. Cl.: G01M 17/02

(54) **Verfahren zur Strukturfestigkeitsprüfung von Reifen, vorzugsweise von LKW-Reifen**

(30) Priorität: 07.05.1998 EP 98108368
(71) Anmelder: NOVA C.O.R.D. AG, 9494 Schaan (LI)
(72) Erfinder: Rottenkolber, Hans Dr., 83123 Amerang (DE)
(74) Vertreter: Hano, Christian, Dipl.-Ing.

(57) **Zusammenfassung**

Bei dem Verfahren zur Strukturfestigkeitsprüfung von Reifen, vorzugsweise von LKW Reifen, wird die von dem Reifen zurückgestreute Strahlung in einem Zweistrahl-Interferometer in zwei Teilstrahlungen aufgeteilt, in dem Zweistrahl-Interferometer die eine der beiden Teilstrahlungen gegen die andere Teilstrahlung in einer Richtung verkippt, die einer Versetzung senkrecht zu einer Tangentialen des Reifens entspricht (Radial-Shearing), in dem Zweistrahl-Interferometer eine der beiden Teilstrahlungen schrittweise phasenverschoben, die von dem Reifen zurückgestreute und in dem Zweistrahl-Interferometer in die zwei Teilstrahlungen aufgeteilte und wieder zusammengeführte Strahlung durch die Oberfläche des Reifens abbildende Komponenten einem elektronischen Bildsensorsystem zugeführt, die von dem Bildsensorsystem abgegebenen Signale digitalisiert und in einem Bildverarbeitungssystem zu einem Modulo-2π-Bild weiterverarbeitet, das Modulo-2π-Bild zu einem Ausgangs-Grauwertbild verstetigt und das Ausgangs-Grauwertbild unter Bezugnahme auf einen für einen schmalen, bezüglich der Reifenachse im wesentlichen kreisförmig verlaufenden Bereich der Oberfläche des Reifens vorher bestimmten Referenzgrauwert zu einem Normierungs-Grauwertbild normiert, und das Normierungs-Grauwertbild der Torussegmente zu einem in Bezug auf die Strukturfestigkeit des jeweiligen Torussegments auswertbaren Bewertungs-Grauwertbild weiterverarbeitet. Dabei wird wenigstens eine Reifenseite in radial übereinanderliegende Kreisringe eingeteilt, für jeden Kreisring ausgehend von dem normierten Ausgangs-Grauwertbild ein Kreisringmittelwert errechnet, und mit Hilfe der Kreisringmittelwerte als Stützpunkten ein radiales Durchschnittsprofil gebildet und dieses radiale Durchschnittsprofil vom Normalisierungs-Grauwertbild abgezogen.

## Beschreibung

Die Erfindung betrifft ein Verfahren zur Strukturfestigkeitsprüfung von Reifen, vorzugsweise von LKW-Reifen nach dem Oberbegriff des Patentanspruchs 1 bzw. 2.

Ein solches gattungsgemäßes Verfahren ist aus der EP 0 823 623 A1 bekannt. Wesentliche Teilschritte des gattungsgemäßen Verfahrens wurden bereits in der DE 42 31 578 A1 beschrieben.

Das gattungsgemäße Verfahren dient in der Praxis hauptsächlich zur Ermittlung der Strukturfestigkeit von LKW-Reifen oder von Reifen bei denen Gürtel und Karkasse weitgehend unabhängige Festigkeitsträger sind. Dieses Verfahren hat sich zur Erkennung von Reifendefekten bei Reifen mit gleichem oder ähnlichem Verformungsverhalten als ausgezeichnet herausgestellt. Im Rahmen vieler Tests wurde jedoch herausgefunden, daß die normale Verformung jedes Reifens beim Ein- oder Ablassen von Luft individuell sehr unterschiedlich verläuft. Sie hängt u.a. vom Reifentyp, der Reifengröße, dem Reifenhersteller, der Reifenkonstruktion und bisherigen Reifenbeanspruchungen ab. Diese individuellen Unterschiede der normalen Reifenverformung überlagern das durch tatsächliche Defekte hervorgerufene Signal im resultierenden Grauwertbild überlagern.

Der Erfindung liegt die Aufgabe zugrunde, ein Verfahren zur Strukturfestigkeitsprüfung von Reifen bereitzustellen, das bei

Reifen mit unterschiedlichsten Verformungseigenschaften eine sichere Erkennung von Reifendefekten gewährleistet.

Diese Aufgabe wird erfindungsgemäß durch ein Verfahren mit den Merkmalen der Patentansprüche 1 bzw. 2 gelöst.

Sowohl das Verfahren nach Anspruch 1 als auch das Verfahren nach Anspruch 2 gewährleisten eine sichere Erkennung von Reifendefekten durch eine individuelle, selbstkonsistente Kalibrierung für jeden einzelnen Reifen.

Bevorzugt werden zur Ermittlung des radialen Durchschnittsprofils alle Torussegmente berücksichtigt (Anspruch 3).

Ausführungsbeispiele der Erfindung werden nachfolgend anhand von Figuren erläutert. Es zeigt:
- Fig. 1: im Querschnitt schematisch den Schulterbereich eines LKW-Reifens;
- Fig. 2: eine teilweise Seitenansicht des Reifens von Fig. 1, die einen Prüfabschnitt mit einem Normierungsstreifen zeigt
- Fig. 3: ein Ausgangs-Grauwertbild mit marmorähnlichem Muster, wie es auf der Grundlage einer durch zu starke Störungen beeinflußten Messung erhalten wird,
- Fig. 4: schematisch die toroidale und radiale Segmentierung des Reifens.

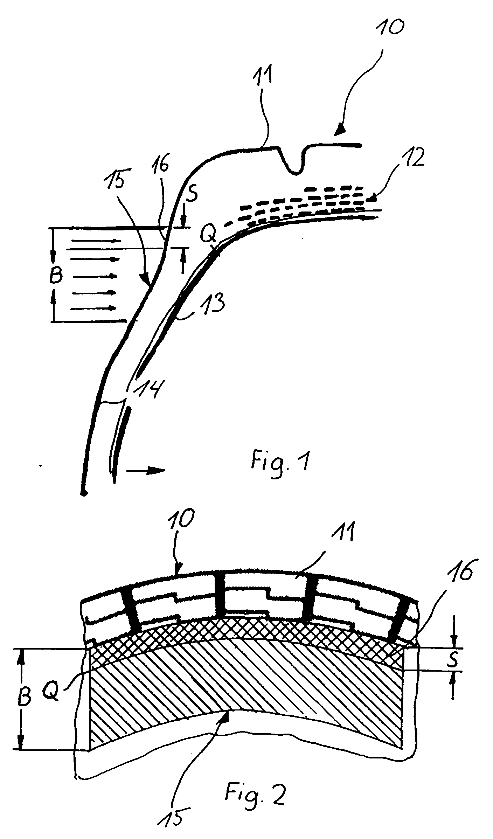

Fig. 1 zeigt schematisch den Querschnitt eines zu prüfenden LKW-Reifens 10 mit einer typischerweise Stahlgewebe enthaltenden Karkasse 13, einer Lauffläche 11 sowie einem zwischen der Karkasse 13 und der Lauffläche 11 angeordneten Gürtelpaket 12. In Fig. 2 ist ein bezüglich der Reifenachse kreisbogenförmiger Prüfabschnitt 15 der Seitenwand 14 des LKW-Reifens 10 gezeigt, dessen oberer Rand sich im Bereich des Übergangs zwischen Karkasse 13 und Gürtelpaket 12 befindet.

Zur Überprüfung des Prüfbereichs 15 auf einen Fehler wird der Prüfbereich 15 zunächst mittels des aus der DE-OS-42 31 578 A1 bekannten Verfahrens geprüft, bei dem wenigstens eine Laserdiode zur Beleuchtung verwendet wird und das Shearing in radialer Richtung des LKW-Reifens, d.h. in Fig. 2 von oben nach unten oder umgekehrt erfolgt. Die Verformung erfolgt dadurch, daß der Reifendruck vermindert oder erhöht wird, wodurch die Seitenwand 14 des Reifens um eine Linie Q im Übergangsbereich zwischen Karkasse 13 und Gürtelpaket 12 nach innen bewegt wird. Die Verformung entspricht deswegen annähernd der Verformung eines einseitig eingespannten Trägers.

Es wird ein Modulo-2π-Bild gewonnen, das so in ein Ausgangs-Grauwertbild umgesetzt wird, daß die Grauwerte der einzelnen Bildpunkte die Differenz der Verformung zweier Punkte auf dem Prüfobjekt angeben, die auf einer Radialen bzw. auf zur Radialen parallel Geraden benachbart sind. Hierfür geeignete Entfaltungsmethoden sind zum Beispiel beschrieben in "Digitale Verarbeitung und Auswertung von Interferenzbildern", Wolfgang Osten, Akademieverlag Berlin, 1991, S. 138 bis 144 und in "Proceedings of the First International Workshop on Automatic Processing of Fringe Patterns", Akademieverlag Berlin, 1989, S. 23 bis 31.

Wenn beispielsweise durch Störungen wie z.B. starke Vibrationen der Prüfvorrichtung, auf die Prüfvorrichtung scheinendes Sonnenlicht o.ä., die dem Bildsensorsystem zugeführte Strahlung inkohärent ist, führt die Modulo-2π-Bildverarbeitung zu einem Ausgangs-Grauwertbild, daß für eine weitere Verarbeitung unbrauchbar ist. Ein solches unbrauchbares Ausgangs-Grauwertbild mit marmorähnlichem Muster ist in Fig. 3 gezeigt.

Um auszuschließen, daß aufgrund dieses unbrauchbaren Ausgangs-Grauwertbildes ein Reifendefekt nicht erkannt wird, wird eine Fehlerprüfung durchgeführt.

Die Fehlerprüfung des Ausgangs-Grauwertbildes erfolgt so, daß das Ausgangs-Grauwertbild partiell differenziert wird, indem ein zweites, dem Ausgangs-Grauwertbild gleiches Grauwertbild erzeugt und gegenüber dem Ausgangs-Grauwertbild um ein oder zwei Pixel verschoben wird und danach eine subtraktive Überlagerung beider Grauwertbilder erfolgt.

Die sich aus der partiellen Differentiation des Ausgangs-Grauwertbildes ergebenden Bildwerte werden dahingehend untersucht, ob sie einen vorbestimmten Fehlerschwellwert übersteigen. Wenn ein Bildwert den vorbestimmten Fehlerschwellwert übersteigt, wird die weitere Verarbeitung abgebrochen und die vorangegangenen Verfahrensschritte erneut durchgeführt.

Wird keine Störung festgestellt, wird anschließend von einem schmalen kreisbogenförmigen Streifen des Ausgangs-Grauwertbildes, der einem schmalen kreisbogenförmigen Streifen 16 am Außenrand des Prüfbereichs 15 der Seitenwand 14 mit einer Breite S von beispielsweise 5 mm entspricht, in dem Rechner ein mittlerer Grauwert durch bekannte Methoden der Mittelwertbildung ermittelt. Dabei wird jedem Bildpunkt in dem Streifen des Ausgangs-Grauwertbildes ein bestimmter Grauwert aus einem Grauwertbereich von 0 (schwarz) und 255 (weiß) zugeordnet. Anschließend werden die Grauwerte aller Bildpunkte in dem schmalen Streifen addiert und die Summe durch die Anzahl der Bildpunkte geteilt.

Daraufhin wird in dem Rechner der so ermittelte mittlere Grauwert von einem vorher bestimmten Referenz-Grauwert, z.B. dem Grauwert 128 subtrahiert. Nun wird in dem Rechner der dem Ergebnis der Subtraktion entsprechende Grauwert, der auch negativ sein kann, zu den Grauwerten der einzelnen Bildpunkte des Ausgangs-Grauwertbildes addiert, wodurch ein Normierungs-Grauwertbild erhalten wird.

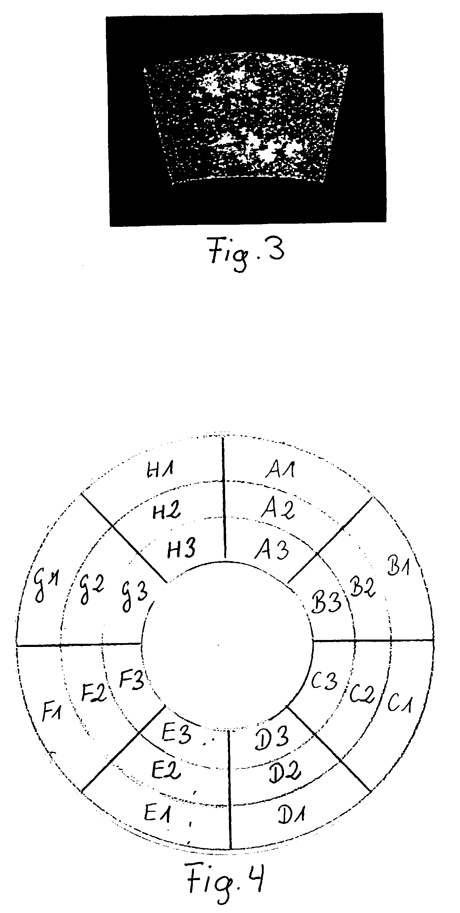

Nachdem für alle Torussegmente (acht in Fig. 6) ein Normierungs-Grauwertbild erzeugt wurde, wird jedes Torussegment der entsprechenden Seite des Reifens in radial übereinanderliegende Kreisringsegmente (drei in Fig. 6) A1, A2, A3; B1, B2, B3; ....; H1, H 2, H3 eingeteilt, wobei die radiale Segmentierung für jedes Torussegment in gleicher Weise erfolgt (siehe Fig. 6). Danach wird für jedes Kreisringsegment der Durchschnittsgrauwert des Normierungs-Grauwertbildes errechnet. Anschließend wird aus den Durchschnittsgrauwerten der auf einem Kreis liegendenden Kreisringsegmente A1 bis H1, A2 und H2, A3 und H3, jeweils ein Kreisringmittelwert gebildet.

Mit Hilfe der so erhaltenen Kreisringmittelwerte als Stützpunkten wird ein radiales Durchschnittsprofil oder Idealprofil erzeugt. Dieses radiale Durchschnittsprofil wird von den Normierungs-Grauwertbildern abgezogen, wodurch jeweilige Bewertungs-Grauwertbilder erhalten werden.

Wenn ein Wert der Bewertungs-Grauwertbilder bei Erkennung eines Reifendefekts einen vorgegebenen Schwellgrauwert überschreitet, kann beispielsweise durch den Rechner ein Signal abgegeben werden, das ein Hupsignal einer Hupvorrichtung oder ein optisches Signal einer optischen Anzeige auslöst, wodurch eine Bedienungsperson, die das erfindungsgemäße Verfahren durchführt, auf einfache Weise auf einen Reifendefekt hingewiesen werden kann. Nach Auslösung des Signals kann der ganze Vorgang abgebrochen werden, da der geprüfte LKW-Reifen für eine weitere Verarbeitung ungeeignet ist.

Durch die Ermittlung des radialen Durchschnittsprofils und dessen Subtraktion von den Normierungs-Grauwertbildern erhält man eine individuelle, selbstkonsistente Kalibrierung des Grauwertbildes. Dabei liegen die Überlegungen zugrunde, daß bei einem Reifen als toroidalsymmetrischem Gebilde ein einziges mittleres Radialprofil die "ideale" Deformation über den Reifenquerschnitt für den gesamten toroidalen Reifenumfang repräsentiert und daß gewöhnlich die von Defekten und Stößen eingenommene Fläche klein ist im Vergleich zur gesamten Reifenoberfläche.

Ausreichende Ergebnisse können bei der Bildung des radialen Durchschnttsprofils abhängig von den Umständen auch dann erzielt werden, wenn nur zwei Torussegmente herangezogen werden.

Abschließend sei noch angemerkt, daß die Einteilung des Reifens in acht Torussegmente mit jeweils drei Kreisringsegmenten für die Durchführung des Verfahrens nicht zwingend notwendig ist. Man kann den Reifen bzw. eine Reifenseite z.B. auch in eine andere geeignete Anzahl von Toruselementen, z.B. 16, einteilen.

Außerdem ist es ggf. ausreichend zur Bildung des Kreisringmittelwertes den Durchschnitt aller Grauwerte des jeweiligen Kreisringes oder eines Teils des Kreisringes zu ermitteln, anstatt wie beschrieben zunächst den Durchschnittsgrauwert jedes einzelnen Kreisringsegmentes zu ermitteln und aus den Durchschnittsgrauwerten der Kreisringsegmente eines Kreisringes den Kreisringmittelwert zu berechnen.

## Patentansprüche

1. Verfahren zur Strukturfestigkeitsprüfung von Reifen, vorzugsweise von LKW Reifen mit folgenden Schritten:
- der Reifen wird mit kohärentem Licht beleuchtet,
- die von dem Reifen zurückgestreute Strahlung wird in einem Zweistrahl-Interferometer in zwei Teilstrahlungen aufgeteilt,
- in dem Zweistrahl-Interferometer wird die eine der beiden Teilstrahlungen gegen die andere Teilstrahlung in einer Richtung verkippt, die einer Versetzung senkrecht zu einer Tangentialen des Reifens entspricht (Radial-Shearing),
- in dem Zweistrahl-Interferometer wird eine der beiden Teilstrahlungen schrittweise phasenverschoben,
- die von dem Reifen zurückgestreute und in dem Zweistrahl-Interferometer in die zwei Teilstrahlungen aufgeteilte und wieder zusammengeführte Strahlung wird durch die Oberfläche des Reifens abbildende Komponenten einem elektronischen Bildsensorsystem zugeführt,
- die von dem Bildsensorsystem abgegebenen Signale werden digitalisiert und in einem Bildverarbeitungssystem zu einem Modulo-2π-Bild weiterverarbeitet,
- das Modulo-2π-Bild wird zu einem Ausgangs-Grauwertbild verstetigt
- das Ausgangs-Grauwertbild wird unter Bezugnahme auf einen für einen schmalen, bezüglich der Reifenachse im wesentlichen kreisförmig verlaufenden Bereich der Oberfläche des Reifens vorher bestimmten Referenzgrauwert zu einem Normierungs-Grauwertbild normiert,
- wobei das Normierungs-Grauwertbild zu einem in Bezug auf die Strukturfestigkeit des Reifens auswertbaren Bewertungs-Grauwertbild weiterverarbeitet wird,
dadurch gekennzeichnet, daß
- wenigstens eine Reifenseite in radial angrenzende Kreisringe eingeteilt wird,
- für jeden Kreisring oder eines Teils jedes Kreisringes ausgehend von dem normierten Ausgangs-Grauwertbild ein Kreisringmittelwert errechnet wird und
- mit Hilfe der Kreisringmittelwerte als Stützpunkten ein radiales Durchschnittsprofil gebildet und dieses radiale Durchschnittsprofil vom Normalisierungs-Grauwertbild abgezogen wird.

2. Verfahren zur Strukturfestigkeitsprüfung von Reifen, vorzugsweise von LKW Reifen, bei dem der Reifen in Torussegmente eingeteilt wird und für mindestens zwei Torussegmente jeweils folgende Schritte durchgeführt werden:
- die Torussegmente werden mit kohärentem Licht beleuchtet,
- die von den Torussegmenten zurückgestreute Strahlung wird in einem Zweistrahl-Interferometer in zwei Teilstrahlungen aufgeteilt,
- in dem Zweistrahl-Interferometer wird die eine der beiden Teilstrahlungen gegen die andere Teilstrahlung in einer Richtung verkippt, die einer Versetzung senkrecht zu einer Tangentialen des Reifens entspricht (Radial-Shearing),
- in dem Zweistrahl-Interferometer wird eine der beiden Teilstrahlungen schrittweise phasenverschoben,
- die von den Torussegmenten zurückgestreute und in dem Zweistrahl-Interferometer in die zwei Teilstrahlungen aufgeteilte und wieder zusammengeführte Strahlung wird durch die Oberfläche der Torussegmente abbildende Komponenten einem elektronischen Bildsensorsystem zugeführt,
- die von dem Bildsensorsystem abgegebenen Signale werden digitalisiert und in einem Bildverarbeitungssystem zu einem Modulo-2π-Bild weiterverarbeitet,
- das Modulo-2π-Bild wird zu einem Ausgangs-Grauwertbild verstetigt und
- das Ausgangs-Grauwertbild wird unter Bezugnahme auf einen für einen schmalen, bezüglich der Reifenachse im wesentlichen kreisbogenförmig verlaufenden Bereich der Oberfläche des Reifens vorher bestimmten Referenzgrauwert zu einem Normierungs-Grauwertbild normiert,
- wobei das Normierungs-Grauwertbild der Torussegmente zu einem in Bezug auf die Strukturfestigkeit des jeweiligen Torussegments auswertbaren Bewertungs-Grauwertbild weiterverarbeitet wird,
dadurch gekennzeichnet, daß
- jedes Torussegment in radial angrenzende Kreisringsegmente eingeteilt wird,
- aus dem Normierungs-Grauwertbild der Durchschnittsgrauwert jedes Kreisringsegmentes der wenigstens zwei Torussegmente ermittelt wird,
- aus den Durchschnittsgrauwerten von auf einem Kreisring liegenden Kreisringsegmenten ein Kreisringmittelwert berechnet wird, und
- mit Hilfe der Kreisringmittelwerte als Stützpunkten ein radiales Durchschnittsprofil gebildet wird, das von dem jeweiligen Normierungs-Grauwertbild abgezogen wird.

3. Verfahren nach Anspruch 2, dadurch gekennzeichnet, daß zur Ermittlung des radialen mittleren Profils alle Torussegmente berücksichtigt werden.
